**Europäisches Patentamt**

**European Patent Office**

**Office européen des brevets**

(19)

(11) Publication number: **0 084 192**
**A2**

# (12) EUROPEAN PATENT APPLICATION

(21) Application number: **82201592.1**

(22) Date of filing: **13.12.82**

(51) Int. Cl.³: **G 02 F 1/37**

(30) Priority: **15.01.82 US 339637**

(43) Date of publication of application:
**27.07.83 Bulletin 83/30**

(84) Designated Contracting States:
**DE FR GB IT NL SE**

(71) Applicant: **PRINCETON APPLIED RESEARCH CORPORATION**
**7 Roszel Road**
**Princeton New Jersey 08540(US)**

(72) Inventor: **Nestor, James Richard**
**1004 Deer Creek**
**Plainsboro New Jersey 08536(US)**

(72) Inventor: **Coor, Thomas**
**60 Pheasant Hill Road**
**Princeton New Jersey 08540(US)**

(72) Inventor: **Petty, Norman W.**
**130 Taylor Terrace**
**Hopewell New Jersey 08525(US)**

(74) Representative: **Rowe, Eric Nielsen et al,**
**Edward Evans & Co. Chancery House 53-64 Chancery Lane**
**London WC2A 1SD(GB)**

(54) Crystals for altering the frequency of an incident optical wave and apparatus and methods for using same.

(57) Anisotropic crystals (30, 60, 100) for altering the frequency of at least one incident optical wave (42, 78, 80, 102, 104) each have a surface (34, 70, 110) shaped such that the direction of incidence of that optical wave is maintainable normal to the surface at points of incidence of the wave on the surface and/or such that the direction of exit of the wave from the crystal is maintainable normal to the surface at points of exit of the wave from the surface during simultaneous selective changing of angles $(\theta_m, \theta_n)$ between an optic axis (32, 62, 64, 112) of the crystal (30, 60, 100) and the directions of incidence and exit. Apparatus for altering the frequency of such an incident optical wave (42, 78, 80, 102, 104) include the aforementioned crystal (30, 60, 100) and a device (50, 54, 88, 92) for selectively changing the aforementioned angles $(\theta_m, \theta_n)$. Methods for altering the frequency of the incident optical wave (42, 78, 80, 102, 104) include propagating an optical wave (42, 78, 80, 102, 104) through the aforementioned crystal such that the aforementioned orientation of the directions of incidence and/or exit of the optical wave is maintained during changing of the aforementioned angles $(\theta_m, \theta_n)$.

FIG. 3

EP 0 084 192 A2

Crystals for altering the frequency of an incident
optical wave and apparatus and methods for using same

BACKGROUND OF THE INVENTION

The present invention relates to crystal optics and, more
particularly, to crystals and apparatus for altering the frequency
of an incident optical wave and methods for using the crystals and
apparatus.

Frequency alteration (also known as frequency mixing, optical
mixing and harmonic generation) includes a nonlinear optical phenomenon which has been developed in conjunction with advances in
pulsed laser technology. The frequency alteration phenomenon is
dependent on the second power of the intensity of optical waves
applied to certain anisotropic crystals.

As is known in the art, incident optical waves useful for
frequency alteration generally have a range of wavelengths between
approximately 400 and 1400 nanometers, the lower bound of wavelengths
being set by the physical characteristics of the crystals used, while
the upper bound is set by convenience. Frequency doubling, or second
harmonic generation (SHG), is a special case where one incident
optical wave, or two waves having the same frequency, produce a
resultant wave having a frequency twice that of the incident wave or
waves. Resultant waves generally have a range of wavelengths between
approximately 200 and 700 nanometers. Hereinafter, the term optical
waves means electromagnetic waves having wavelengths between approximately 200 and 1400 nanometers.

Commonly, pulsed laser waveforms undergo the frequency doubling
effect when the waveforms are passed through a crystal known as a
frequency doubler. Frequency doubling requires a precise orientation
among the direction or directions of incident propogation, the
direction or directions of incident polarization and the directions
of the crystallographic axes. This orientation in turn has a dependence on the frequency of an incident optical wave.

To obtain a good conversion efficiency, it is necessary that
the fundamental (incident) and harmonic (doubled) waves remain in
phase as they propogate through a frequency doubling crystal. For the case of a pulsed dye laser, phase matching is achieved by passing a focused fundamental beam through an anisotropic crystal of good optical transmittance. The crystal selected should exhibit birefringence, i.e., there exists at least one direction through the crystal such that the velocity of propagation of a fundamental wave precisely matches the velocity of its harmonic wave. Along this direction the refactive indices for the two waves are identical. Because birefringence is a wavelength dependent phenomenon, the proper direction of propagation through a frequency doubling crystal is likewise wavelength dependent.

A frequency doubling crystal is specified by convention by an angle $\theta_m$ , which is the polar angle between an optic axis and the direction of propogation of an incident optical wave through the crystal. An optic axis is a direction through a doubly refracting (i.e., birefringent) medium in which all components of plane polarized optical waves travel with the same velocity. A uniaxial crystal has one such direction; a biaxial crystal has two such directions.

$\theta_m$ indicates the direction of propagation through a frequency doubling crystal such that frequency doubling occurs. For widely used SHG materials, for a specific crystal type at a specified temp-erature, $\theta_m$ decreases at the longer wavelengths. This phenomenon requires that alignment accuracy be increased at increased wavelengths.

$\theta_n$ is defined herein as the polar angle between an optic axis and a direction of exit of an optical wave. $\theta_m$ and $\theta_n$ may be vertical angles. The magnitude of $\theta_m$ equals, in many cases, the magnitude of $\theta_n$ . Hereinafter, reference to $\theta_m$ includes an equivalent reference to $\theta_n$.

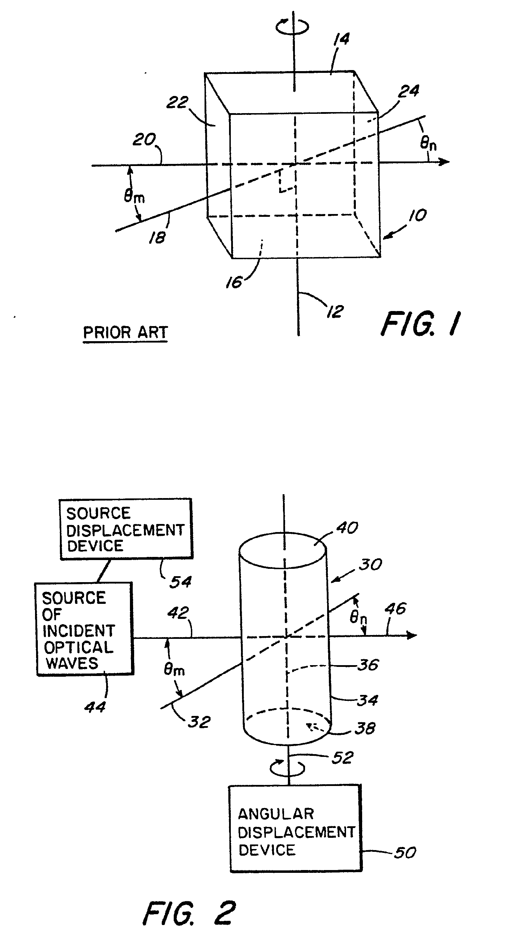

Conventional methods of second harmonic generation employ crystals of rectangular geometry with optically polished entrance and exit faces (see Fig. 1). Phase matching is accomplished by variation of $\theta_m$ or by temperature tuning, although temperature tuning is generally limited to a limited region of the optical spectrum, with an individual crystal. Outside of this limited region, phase matching must be done by angle variation, i.e., adjusting $\theta_m$ . Usually, the crystal is mounted on an angular displacement device and is tuned to within one minute of the optimum setting for any particular frequency of incident optical waves.

The accuracy of alignment relative to displacement of the crystal about the axis lying along the direction of propogation of incident optical waves is not as critical as the accuracy of alignment of $\theta_m$. Only that component of the polarization vector of an incident optical wave that is properly aligned will contribute to the frequency doubling phenomenon.

When crystals of rectangular geometry are used, inclination of the optic axis relative to the direction of propogation, i.e.,changing $\theta_m$, results in vignetting (refractive displacement of the exit beam) and in Fresnel reflection losses (reflection losses at the faces), both of which are undesirable. Because of Fresnel reflection losses and vignetting, most angular adjustment devices are limited to within a 10° range. The angular range of $\theta_m$ is customarily restricted to within 8° because increasing the cross section of a crystal solely to prevent vignetting increases the cost substanially.

To double the frequencies of a beam of light from a dye laser, conventional methods call for a plurality of crystals, each of which has faces that are cut at increasing angles to the optic axis. Approximately five crystals are used to cover the entire incident optical spectrum between approximately 400 and 1400 nanometers. For certain crystal media, temperature phase matching permits the frequency doubling of an extended wavelength range with a single crystal, but this advantage is accompanied by problems with instrumentation and control.

Accordingly, it is an object of the present invention to reduce the problems of vignetting and Fresnel reflection losses in a frequency doubling crystal.

Another object of this invention is to allow one crystal to be used in place of a plurality of rectangular crystals to operate over the entire incident optical spectrum between approximately 400 and 1400 nanometers.

Still another object of this invention is to convert pulsed incident laser radiation of one frequency to resultant laser radiation of twice the incident frequency.

Yet another object of this invention is to double the frequency of incident optical waves by a new method.

Additional objects and advantages of the invention are set forth in part in the description which follows, and in part are obvious from the description, or may be learned by practice of the invention. The objects and advantages of the invention may be realized and obtained by means of the articles, apparatus and methods particularly pointed out in the appended claims.

To achieve the foregoing objects, and in accordance with purposes of the invention as broadly described herein, the crystal of the present invention for altering the frequency of at least one incident optical wave comprises an anisotropic crystal medium having an optic axis and having (a) a surface, the shape of the surface being such that a direction of incidence of that optical wave is maintainable normal to the surface at points of incidence of the wave on the surface during selective changing of an angle between the direction of incidence and the optic axis; (b) a surface, the shape of the surface being such that the direction of exit of that optical wave is maintainable normal to the surface at points of exit of the wave from the surface during selective changing of an angle between the direction of exit and the optic axis; or, most preferably, (c) incident and exit surfaces, the shapes of the surfaces being such that the direction of incidence and the direction of exit of that optical wave are both maintainable normal to the surfaces at points of the incidence of the wave on the incident surface and points of exit of the wave from the exit surface, respectively, during simultaneous selective changing of a first angle between the direction of incidence and the optic axis and the second angle between the direction of exit and the optic axis.

In a preferred embodiment of the invention, the surfaces of the crystal form a circular cylinder.

In accordance with the present invention, an apparatus for altering selective frequencies of incident optical waves from a source is provided wherein the apparatus comprises (1) one of the aforementioned cyrstals and (2) means for selectively changing the aforementioned angle or angles. Preferably, the means for selectively changing includes an angular displacement device for angularly displacing the source of incident optical waves about an axis of rotation of the crystal. Alternatively, the means for selectively changing includes an angularly displacement device for angularly displacing the crystal about an axis of rotation of the crystal.

Moreover, in accordance with the present invention, a method for altering the frequency of at least one incident optical wave is provided, the method comprising the step of propagating that incident optical wave through a surface of any of the aforementined crystals. The method may also include selectively changing the aforementioned angle or angles.

The above-described methods may include angularly displacing a source of incident optical waves about an axis of rotation of the crystal. Alternatively, the methods may include angularly displacing the crystal about an axis of rotation of the crystal.

## BRIEF DESCRIPTION OF THE DRAWINGS

A greater appreciation of the objects and advantages of the invention may be understood by the below set forth detailed description taken in conjunction with the drawings, wherein:

Fig. 1 is a perspective view of a conventional frequency doubling crystal having rectangular geometry;

Fig. 2 is a perspective view of an embodiment of a frequency doubling apparatus according to the invention;

Fig. 3 is a perspective view of another embodiment of a frequency doubling apparatus according to the invention; and

Fig. 4 is a perspective view of yet another embodiment of a frequency doubling apparatus according to the invention.

## DETAILED DESCRIPTION OF THE INVENTION

Fig. 1 shows a conventional crystal 10 having a rectanglar shape. The crystal has an axis of rotation 12 passing through crystal 10 and intersecting the centers of two planar faces 14 and 16 of crystal 10. Crystal 10 has at least one optic axis 18 which both intersects and is perpendicular to axis of rotation 12. An incident optical wave 20 is preferably normal to both incident surface 22 and exit surface 24 of crystal 10. The direction of incidence of optical wave 20 on crystal 10 forms an angle $\theta_m$ with optic axis 18. The direction of exit of optical wave 20 from crystal 10 forms an angle

$\theta_n$ with optical axis 18. When $\theta_m$ is changed, either by rotating crystal 10 or by angularly displacing a source of optical wave 20 about axis of rotation 12, the angle between optical wave 20 and incident surface 22 changes from normal and Fresnel reflection losses increase. A change of $\theta_m$ may also cause vignetting.

Nevertheless, with conventional crystals such as that illustrated in Fig. 1, it is necessary to change $\theta_m$ as the frequency of incident optical wave 20 changes in order to maintain a selected alteration of frequency. In such conventional crystals, as crystal rotation approaches 8°, losses due to reflections and vignetting render the crystal ineffective. Accordingly, multiple crystals, each having a surface 22 set at progressively increasing (or decreasing) angles with regard to optic axis 18 are required in order to obtain a satisfactory range for frequency alteration of optical wave 20.

In accordance with an embodiment of the present invention, a crystal for altering the frequency of an incident optical wave includes an anisotropic crystal medium having an optic axis and having incident and exit surfaces, the shape of the surfaces being such that the direction of incidence and the direction of exit of the optical wave are maintained normal to the surfaces at points of incidence of the optical wave on the incident surface and at points of exit of the optical wave from the exit surface, respectively, during simultaneously selective changing of an angle between the direction of incidence and the optical axis (i.e., $\theta_m$) and an angle between the direction of exit and the optic axis (i.e., $\theta_n$).

An illustrative example of a crystal of the present invention is shown by Fig. 2, in which a crystal 30 having optic axis 32 is formed of an anisotropic crystal medium. In Fig. 2 incident and exit surfaces form a single right cylindrical surface 34. Axis of rotation 36 passes through crystal 30 and intersects end faces 38 and 40.

In operation, when a representative incident optical wave 42 from a source 44 is incident normal to cylindrical surface 34 and propagates intersectingly across axis of rotation 36 at an angle $\theta_m$ between the direction of incidence of wave 42 and optic axis 32, the frequency of optical wave 42 is altered. Usually the angle $\theta_m$ is selected so that the frequency of exit optical wave 46 is double the frequency of incident optical wave 42.

To maintain a doubling effect when the frequency of an incident optical wave length is changed requires that $\theta_m$ be changed also. Using a cylindrical shape for the incident and exit surfaces of crystal 30 permits the direction of optical wave 42 to be maintained normal to surface 34 at the points of incidence of wave 42 on surface 34 and permits the direction of wave 42 (as wave 42 exits crystal 34 as wave 46) to be maintained normal to surface 34 at the points of exit of wave 42 (as wave 46) from surface 34, during selective changing of $\theta_m$ and $\theta_n$. This normal orientation reduces Fresnel reflection losses and vignetting, thereby allowing crystal 36 to perform frequency alteration over greater ranges of $\theta_m$ and $\theta_n$ than is practical in a crystal with planar incident and exit surfaces. Ranges of $\theta_m$ and $\theta_n$ in excess of 8° are believed possible.

Selective changing of $\theta_m$ and $\theta_n$ can be accomplished by using angular displacement device 50 to angularly displace crystal 30 about axis of rotation 36. Crystal 30 can be connected to angular displacement device 50 by means of a pin 52, for example, which attaches to end face 38 at the intersection of end face 38 and axis of rotation 36. When angular displacement device 50 angularly displaces pin 52, the displacement is communicated to crystal 30, thereby changing $\theta_m$ and $\theta_n$. Alternatively, selective changing of $\theta_m$ and $\theta_n$ can be accomplished by using source displacement device 54 to angularly displace source 44 about axis of rotation 36. Source displacement device 54 may include a track for slidably mounting source 44 thereto and means for sliding source 44 along the track.

Other illustrative crystals according to the present invention have incident and exit surfaces, the shape of which are such that the direction of incidence with respect to the incident surface or the direction of exit with respect to the exit surface, but not necessarily both, of an optical wave is maintainable normal to that surface at points of incidence or of exit, respectively, during selective changing of $\theta_m$ and $\theta_n$. Such crystals reduce losses, although not as much as does the crystal shown in Fig. 2.

Crystals suitable for frequency alteration can have incident and exit surfaces with shapes other than cylinders, provided that the surfaces have shapes such that the directions of incidence and/or exit are maintainable normal to the surfaces at points of incidence or exit, or both, during selective changing of $\theta_m$ or $\theta_n$ , or both. For example, crystals having a circular cross section or having a truncated cylindrical surface may be suitable. In the case of a truncated cylindrical surface, selective changing of $\theta_m$ is limited to a range where the truncated surface does not cause significant vignetting or Fresnel reflection losses. Crystals having a spherical or hemispherical surface are other examples of crystals that may be suitable.

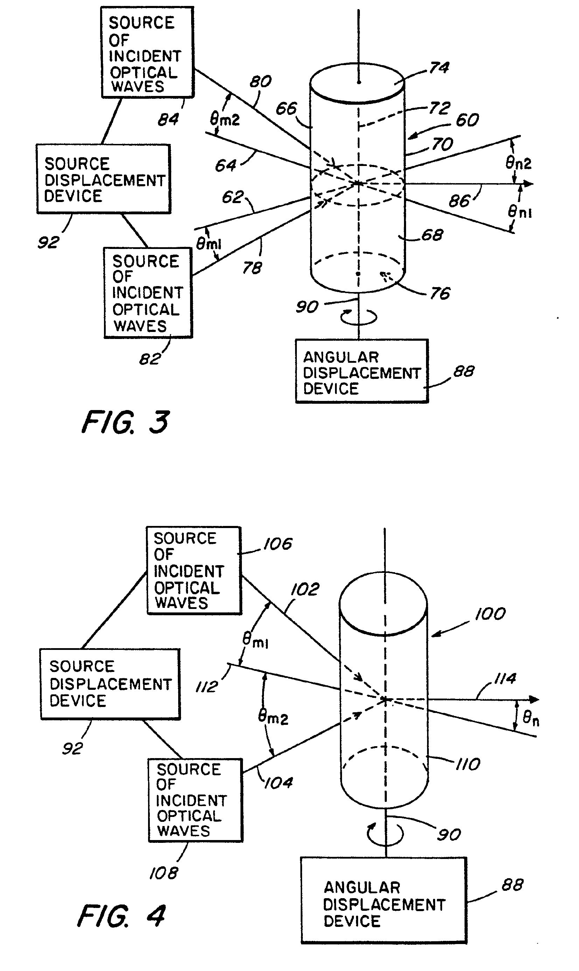

Another illustrative crystal according to the present invention is shown in Fig. 3, in which crystal 60 having at least two optic axes 62 and 64 is formed of an anisotropic crystal medium. As in Fig. 2, incident surface 66 and exit surface 68 form a single cylindrical surface 70. Axis of rotating 72 passes through crystal 60 and intersects two end faces 74 and 76.

In operation, two representative optical waves 78 and 80 from sources 82 and 84, respectively, are incident normal to incident surface 66 at the points of incidence on surface 66 and propagate through crystal 60 intersectingly across axis of rotation 72. The direction of incidence of optical wave 78 forms an angle $\theta_{m1}$ with optic axis 62, while the direction of incidence of optical wave 80 forms an angle $\theta_{m2}$ with optic axis 64. A resultant optical wave 86 having a frequency that is altered from the frequency of optical waves 78 and 80 exits crystal 60 normal to exit surface 68. The incident and exit directions are normal to surfaces 66 and 68, respectively, thereby reducing losses. Angles $\theta_{m1}$ and $\theta_{m2}$ can be changed simultaneously by angularly displacing crystal 60 about axis of rotation 72, for example, by means of angular displacement device 88 and pin 90. Alternatively, $\theta_{m1}$ and $\theta_{m2}$ can be changed either simultaneously or independently by angularly displacing sources 82 and 84 about axis of rotation 72 by means of source displacement device 92. Angular displacement device 88, like device 50 of Fig. 2, may, for example, comprise a motor coupled to rotate pin 90. Source displacement device 92, like device 54 of Fig. 2, may, for example, comprise a track for carrying sources 82 and 84 and a motor for moving sources 82 and 84 along that track.

Another illustrative crystal according to the present invention is shown in Fig. 4 by way of example and not limitation as a crystal 100 wherein two incident optical waves 102 and 104 from two sources 106 and 108, respectively, are incident normal to surface 110 of crystal 100 at points of incidence on surface 110. Optical wave 102 forms an angle $\theta_{m1}$ with optic axis 112 of crystal 100, and optical wave 104 forms an angle $\theta_{m2}$ with optic axis 112. Resultant optical wave 114 exits crystal 100 in a direction normal to surface 110 at an angle $\theta_n$ to optic axis 112. $\theta_{m1}$ and $\theta_{m2}$ can be selectively changed by means of angular displacement device 88 and pin 90 or by means of source displacement device 92 in a manner similar to that described in conjunction with Fig. 3

Crystals 10, 30, 60 and 100 may be formed from an anisotropic crystal medium having good optical transmittance at the wavelengths of the resultant optical waves. The crystal medium selected should have a high nonlinear coefficient to provide sufficient conversion efficiency. Ammonium dihydrogen phosphate (ADP), potassium dihydrogen phosphate (KDP), potassium pentaborate (KPB) and isomorphs of these and other anisotropic crystals having nonlinear properties may form suitable crystal media.

In accordance with the present invention, an apparatus for altering the frequency of at least one incident optical wave from a source includes any of the aforementioned crystals according to the invention and means for selectively changing $\theta_m$ and $\theta_n$ such as angular displacement devices 50 and 88, or source displacement devices 54 and 92.

In one illustrative example of a frequency doubling apparatus according to the invention, a crystal of the present invention may be oriented so that incident laser light from a tunable dye laser undergoes a doubling effect. Variation of the frequency of the incident laser light requires alteration of the angle $\theta_m$ to maintain this doubling effect. Angular displacement of the crystal about its axis of rotation reorients the optic axis so that $\theta_m$ is effectively altered without affecting the normal orientation of the direction of propogation of the incident laser light with respect to the incident and/or exit surfaces of the crystal. Accordingly, vignetting and Fresnel reflection losses are minimized. Moreover, the frequency range over which the crystal operates is maximized, thereby allowing one crystal to be used to operate over the entire optical spectrum of incident optical waves between approximately 400 and 1400 nanometers.

To further improve the conversion efficiency for frequency doubling, an index matching fluid having an index of refraction substantially similar to the index of refraction of the surface of the crystal medium can be provided between the source of the optical waves and the crystal surface. The crystal preferably is actually immersed in such an index matching fluid.

In accordance with the present invention, a method for altering the frequency of an incident optical wave comprises the step of propagating the incident optical wave through an anisotropic crystal having at least one optic axis and having incident and/or exit surfaces, the shapes of the surfaces being such that the direction of incidence of the incident optical wave is maintainable normal to the incident surface at points of incidence of the wave on the incident surface, and/or such that the direction of exit of that incident wave (as an exit wave) is maintainable normal to the exit surface at points of exit of the wave from the exit surface, during selective changing of a first angle between the direction of incidence and the optic axis or a second angle between the direction of exit and the optic axis. The method may also include simultaneously selectively changing both angles. Commonly, the angle between the direction of incidence and the optic axis is chosen so that the resultant frequency is double the frequency of the incident wave.

It will be apparent to those skilled in the art that modifications and variations can be made in the crystals, apparatus and methods of this invention. The invention in its broader aspects is, therefore, not limited to the specific details, representative crystals, apparatus and methods, and illustrative examples shown and described. Accordingly, departure may be made from such details, without departing from the spirit or scope of applicants' general inventive concept.

0084192

-11-

CLAIMS

1. A crystal for altering the frequency of at least one incident optical wave, said crystal comprising:

an anisotropic crystal medium having an optic axis and having a surface, the shape of said surface being such that the direction of incidence of said optical wave is maintainable normal to said surface at points of incidence of said optical wave on said surface during selective changing of an angle between said direction of incidence and said optic axis.

2. A crystal for altering the frequency of at least one incident optical wave, said crystal comprising:

an anisotropic crystal medium having an optic axis and having a surface, the shape of said surface being such that the direction of exit of said optical wave is maintainable normal to said surface at points of exit of said optical wave from said surface during selective changing of an angle between said direction of exit and said optic axis.

3. A crystal for altering the frequency of at least one incident optical wave, said crystal comprising:

an anisotropic crystal medium having an optic axis and having incident and exit surfaces, the shapes of said surfaces being such that both the direction of incidence and the direction of exit of an optical wave are maintainable normal to said surfaces at points of incidence of said optical wave on said incident surface and at points of exit of said optical wave from said exit surface during simultaneous selective changing of a first angle between said direction of incidence and said optic axis and a second angle between said direction of exit and said optic axis.

4. The crystal according to claim 1 or 2, wherein said selective changing includes changing said angle over a range of at least 8°.

5. The crystal according to claim 3, wherein said simultaneous selective changing includes changing both said first and second angles over a range of at least 8°.

6. The crystal according to claim 3, wherein said surfaces form a circular cylinder.

7.  A crystal for altering the frequencies of at least two incident optical waves, said crystal comprising:

an anisotropic crystal medium having two optic axes and having a surface, the shape of said surface being such that the direction of incidence of each of said two optical waves is maintainable normal to said surface at points of incidence of said optical waves on said surface during selective changing of a first angle between one optic axis and the direction of incidence of one of said optical waves and a second angle between the other optic axis and the direction of incidence of the other of said optical waves.

8.  A crystal according to claim 1, 2 and 3, wherein the shape of said surface is such that the directions of incidence of both of two optical waves are maintainable normal to said surface at points of incidence of said optical waves on said surface during selective changing of a first angle between said optic axis and the direction of incidence of one of said optical waves and a second angle between said optic axis and the direction of incidence of the other of said optical waves.

9.  The crystal according to claim 1, 2, 3, or 7, wherein said crystal medium is a material selected from the group consisting of potassium dihydrogen phosphate, potassium pentaborate, ammonium dihydrogen phosphate and isomorphs of same.

10.  An apparatus for altering the frequency of at least one incident optical wave generated from a source, said apparatus comprising:

a crystal comprising an anisotropic crystal medium having an optic axis and having a surface, the shape of said surface being such that the direction of incidence of said optical wave is maintainable normal to said surface at points of incidence of said optical wave on said surface during selective changing of an angle between said direction of incidence and said optic axis; and

means for selectively changing said angle.

11.  An apparatus for altering the frequency of at least one incident optical wave generated from a source, said apparatus comprising:

a crystal comprising an anisotropic crystal medium having an optic axis and having a surface, the shape of said surface being such that the direction of exit of said optical wave is maintainable normal to said surface at points of exit of said optical wave from said surface during selective changing of an angle between said direction of exit and said optic axis; and

means for selectively changing said angle.

12. An apparatus for altering the frequency of at least one incident optical wave generated from a source, said apparatus comprising:

a crystal comprising an anisotropic crystal medium having an optic axis and having incident and exit surfaces, the shapes of said surfaces being such that both the direction of incidence and the direction of exit of an optical wave are maintainable normal to said surfaces at points of incidence of said optical wave on said incident surface and at points of exit of said optical wave from said exit surface, respectively, during simultaneous selective changing of a first angle between said direction of incidence and said optic axis and a second angle between said direction of exit and said optic axis; and

means for selectively changing said angles.

13. The apparatus according to claim 10 or 11, wherein said selective changing includes changing said angle over a range of at least 8°.

14. The apparatus according to claim 12, wherein said simultaneous selective changing includes changing both said first and second angles over a range of at least 8°.

15. The apparatus according to claim 12, wherein said surfaces form a circular cylinder.

16. The apparatus according to claim 10, 11 or 12, wherein said means for selectively changing comprises means for angularly displacing said source about an axis of rotation of said crystal.

17. The apparatus according to claim 10, 11 or 12, wherein said means for selectively changing comprises means for angularly displacing said crystal about an axis of rotation of said crystal.

18. The apparatus according to claim 10, 11 or 12, wherein said crystal medium is a material selected from the group consisting of potassium dihydrogen phosphate, potassium pentaborate, ammonium dihydrogen phosphate and isomorphs of same.

19. The apparatus according to claim 10, 11 or 12, further comprising:

a fluid having a refractive index similar to the refractive index of said crystal; and

wherein said crystal is immersed in said fluid.

20. A method for altering the frequency of at least one incident optical wave generated from a source, comprising the step of:

propagating said incident optical wave through an anisotropic crystal having an optic axis and having a surface, the shape of said surface being such that the direction of incidence of said incident optical wave is maintainable normal to said surface at points of incidence of said optical wave on said surface during selective changing of an angle between said direction of incidence and said optic axis.

21. A method for altering the frequency of at least one incident optical wave generated from a source, comprising the step of:

propagating said incident optical wave through an anisotropic cyrstal having an optic axis and having a surface, the shape of said surface being such that the direction of exit of said incident optical wave is maintainable normal to said surface at points of exit of said optical wave from said surface during selective changing of an angle between said direction of exit and said optic axis.

22. A method for altering the frequency of at least one incident optical wave generated from a source, comprising the step of:

propagating said incident optical wave through an anisotropic crystal having an optic axis and having incident and exit surfaces, the shapes of said surfaces being such that both the direction of incidence and the direction of exit of said incident optical wave are maintainable normal to said surfaces at points of incidence of said optical wave on said incident surface and at points of exit of said optical wave from said exit surface, respectively, during simultaneous selective changing of a first angle between said direction of incidence and said optic axis and a second angle between said direction of exit and said optic axis.

23. The method according to claim 20 or 21, wherein said selective changing includes changing said angle over a range of at least least 8°.

0084192

-15-

24. The method according to claim 22, wherein said simultaneous selective changing includes changing said angles over a range of at least 8°.

25. The method according to claim 22, wherein said surfaces form a circular cylinder.

26. The method according to claim 20 or 21, further comprising the step of: selectively changing said angle.

27. A method according to claim 22, further comprising the step of: simultaneously selectively changing both said first and second angles.

28. The method according to claim 26, wherein said step of selectively changing includes angularly displacing said source about an axis of rotation of said crystal.

29. The method according to claim 27, wherein said step of selectively changing includes angularly displacing said source about an axis of rotation of said crystal.

30. The method according to claim 26, wherein said selective changing includes angularly displacing said crystal about an axis of rotation of said crystal.

31. The method according to claim 27, wherein said step of selectively changing includes angularly displacing said crystal about an axis of rotation of said crystal.

32. The method according to claim 20, 21 or 22, wherein said crystal is formed of a material selected from the group consisting of potassium dihydrogen phosphate, potassium pentaborate, ammonium dihydrogen phosphate and isomorphs of same.

0084192

PRIOR ART

FIG. 1

FIG. 2

FIG. 3

FIG. 4